# EUROPEAN PATENT SPECIFICATION

(11) **EP 4 016 284 B1**
(45) Date of publication and mention of the grant of the patent: **03.09.2025**
(21) Application number: 21212504.1
(22) Date of filing: 06.12.2021
(51) Int. Cl.: G06F 8/60, G06F 8/61, G06F 9/445

(54) **FRAMEWORK FOR INDUSTRIAL ANALYTICS**
RAHMENWERK FÜR INDUSTRIELLE ANALYTIK
CADRE POUR ANALYSE INDUSTRIELLE

(30) Priority: 15.12.2020 US 202063125741 P; 05.03.2021 US 202117193398
(43) Date of publication of application: 22.06.2022
(73) Proprietor: Baker Hughes Holdings LLC, Houston, TX 77073 (US)
(72) Inventor: LELE, Shreyas, Houston, 77073 (US); SONAWANE, Karan, Houston, 77073 (US); ROUT, Simadri, Houston, 77073 (US)
(74) Representative: Novagraaf Group

(56) References cited:
- WO-A2-2014/093909
- US-A1- 2019 102 157
- US-A1- 2020 117 434
- US-A1- 2020 117 477

## Description

### FIELD

The present invention is in the field of automatic deployment of analytics packages.

### BACKGROUND

Analytics-as-a-service (AaaS) can provide tools (e.g., data analytics software) that can allow for organizing, analyzing and presenting data. AaaS can operate in a distributed computing system (e.g., a cloud) that can include multiple servers (e.g., in data centers distributed over multiple locations). In some implementations, AaaS can provide end-to-end capabilities to its customer (e.g., a company) that can include data acquisition, data analysis and data visualization (e.g., visualization of results of the data analysis).

US 2020/117434 A1 discloses a method for distribution of data science workloads. US 2019/102157 A1 discloses redeploying functions across multiple container platforms. US 2020/117477 A1 discloses edge configuration of software systems. WO 2014/093909 A2 discloses a metadata driven analytics framework.

### SUMMARY

The present invention is defined in the accompanying claims.

Various aspects of the disclosed subject matter may provide one or more of the following capabilities.

A method includes receiving data characterizing an analytics package, and generating, by an analytics framework associated with a plurality of compute nodes, a container image associated with the analytics package and a unique identifier indicative of the container image. The container image is saved in a central container registry. The method further includes receiving, from a client, data characterizing deployment parameters associated with the deployment of the container image on the plurality of compute nodes and the unique identifier indicative of the container image. The method also includes generating at least one analytics service pod based on the deployment parameters and the unique identifier. The at least one analytics service pod includes the container image. The at least one analytics service pod is configured to execute the analytics package on one or more compute nodes of the plurality of compute nodes based on the deployment parameters. The deployment parameters include computing resource associated with execution of the at least one analytics service pod on the plurality of compute nodes.

One or more of the following features can be included in any feasible combination.

In one implementation, generating the at least one analytics service pod includes selecting the container image from a plurality of container images saved in the central container registry based on the received unique identifier. In another implementation, the method further includes receiving data characterizing a request to execute the analytic package on the one or more compute nodes of the plurality of compute nodes; and executing the analytics package by at least deploying the container image in first analytic pod.

In one implementation, data characterizing the analytics package is received by an incubator service via a first representational state transfer (REST) application programming interface (API) call, data characterizing deployment parameters is received by a deployer service via a second REST API call, and data characterizing the request to execute the analytic package is received by the at least one analytics service pod via a third REST API call. The incubator service, the deployer service and the at least one analytics service pod are included in the analytics framework. In another implementation, the method further includes providing the unique identifier to the client and receiving data characterizing deployment parameters from the client. In yet another implementation, the container image includes code of one or more analytical models in the analytics package. In one implementation, the plurality of compute nodes are a kubernetes cluster.

In some implementations, the method can further include generating multiple replicas of analytics service pods based on a received number of analytics service pod replica. The deployment parameters include the number of analytics service pod replica. In some implementations, computing resource includes one or more of data storage capacity, random access memory, and processing resources.

Non-transitory computer program products (i.e., physically embodied computer program products) are also described that store instructions, which when executed by one or more data processors of one or more computing systems, causes at least one data processor to perform operations herein. Similarly, computer systems are also described that may include one or more data processors and memory coupled to the one or more data processors. The memory may temporarily or permanently store instructions that cause at least one processor to perform one or more of the operations described herein. In addition, methods can be implemented by one or more data processors either within a single computing system or distributed among two or more computing systems. Such computing systems can be connected and can exchange data and/or commands or other instructions or the like via one or more connections, including a connection over a network (e.g. the Internet, a wireless wide area network, a local area network, a wide area network, a wired network, or the like), via a direct connection between one or more of the multiple computing systems, etc.

These and other capabilities of the disclosed subject matter will be more fully understood after a review of the following figures, detailed description, and claims.

### BRIEF DESCRIPTION OF THE FIGURES

These and other features will be more readily understood from the following detailed description taken in conjunction with the accompanying drawings, in which:
FIG. 1 is a flow chart of an exemplary method for deploying an analytics package on a distributed computing system;
FIG. 2 illustrates an exemplary analytics framework for deploying an analytics package on a distributed computing system;
FIG. 3 illustrates an exemplary container image indicative of an analytics package; and
FIG. 4 illustrates an exemplary schematic illustration of multiple analytics service pod deployed on the distributed computing system.

### DETAILED DESCRIPTION

Industrial analytics can be used to model physical systems (e.g., oil and gas industrial systems) and assess their current operations and/or predict their future operation. Industrial analytics can include an analytics package (e.g., including one or more analytical model(s)) that can be executed in parallel or in sequence. The analytics package can be executed on a distributed computing system that includes a cluster of compute nodes (e.g., Kubernetes cluster). An analytic framework can allow a client (e.g., a data scientist) to deploy and execute the analytics package. Deployment and execution of analytics packages on existing analytics framework can be inefficient and time-consuming. For example, the client may have to manually deploy the analytics package and/or execute the deployed analytics package. Additionally, the analytics framework can be complex, and the client may need to be trained / experienced in using the analytics framework. This can make it difficult for inexperienced clients from using the distributed computing system. Some implementations of the current subject matter can provide an improved analytics framework that can automate the deployment and/or execution of analytics package(s). Additionally or alternately, the improved analytics framework can reduce the time taken to deploy and/or execute the analytics package.

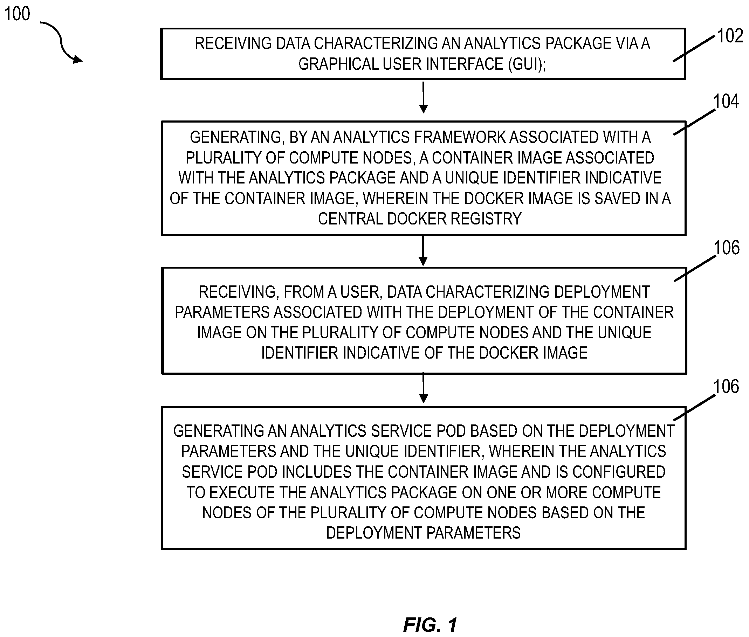

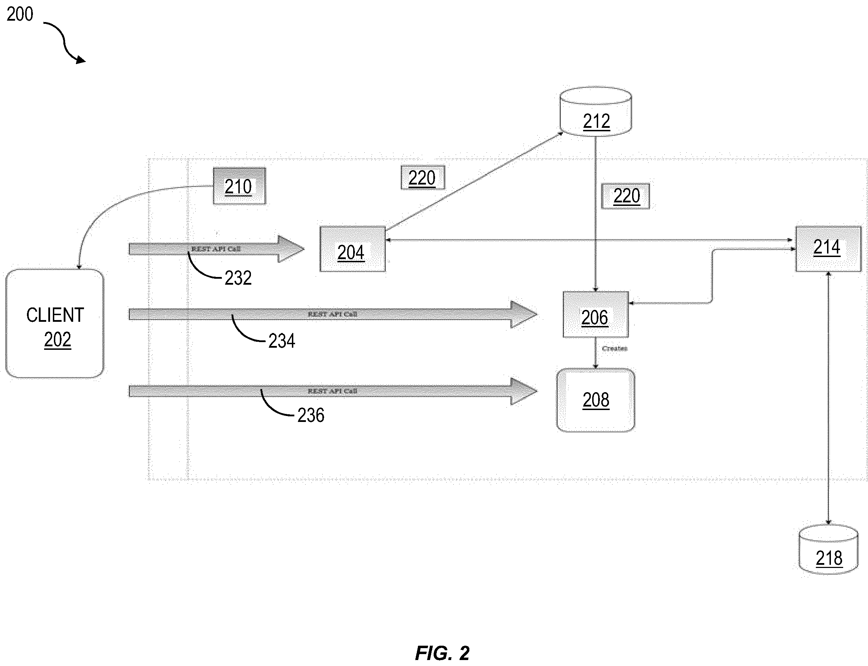

FIG. 1 is a flow chart of an exemplary method for deploying an analytics package on a distributed computing system (e.g., a cloud, a kubernetes cluster, etc.). The analytics package can include, for example, source code of the analytics (e.g., code of analytical models) with its dependencies listed in a text file (e.g., a requirements.txt file). The distributed computing system can include a plurality of compute nodes with computing resources (e.g., processors, random access memory, data storage capacity, etc.) for executing the analytics package. At step 102, data characterizing analytics package is received by an analytics framework of the distributed computing system. In some implementations, the analytic framework can include an abstraction / flow that can allow for execution of the analytics package by generating, deploying and executing a container image of the analytics package. In some implementations, the analytics package can be provided by a client (e.g., a data scientist, a customer, etc.) of the distributed computing system. The analytics package can include computer executable code (e.g., code defining user's analytical model). FIG. 2 illustrates an exemplary analytics framework 200 of a distributed computing system. The analytics framework 200 can receive the data characterizing the analytics package from a client 202 (e.g., via a GUI). This can be done, via a first application programming interface (API) call 232 (e.g., a first representational state transfer [REST] call). In some implementations, the client can upload the analytics package (e.g., an analytical model of an industrial system) and the uploaded analytics package can be received by an incubator service 204 of the analytics framework 200.

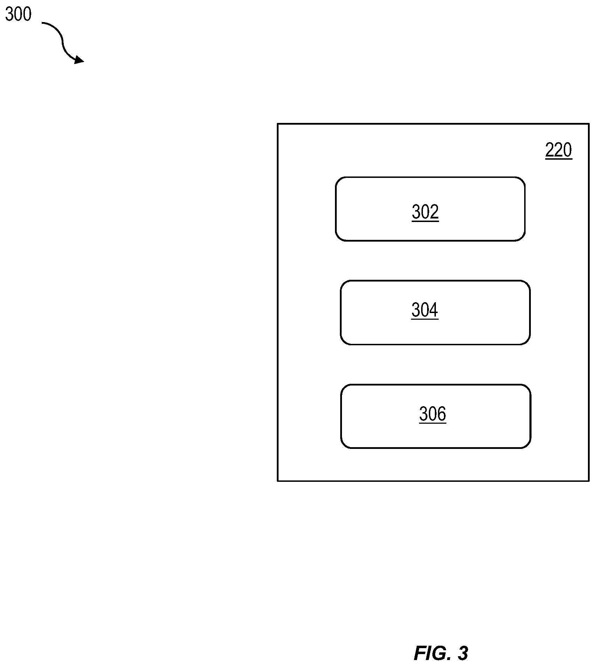

At step 104, the incubator service 204 in the analytics framework 200 can generate a container image 220 associated with the analytics package. In some implementations, the incubator service 204 can include software that can create the container image of the analytics package and push the container image 220 to a container registry 212. In some implementations, the container image 220 can be a standalone package of software that includes the requisite executable code to execute an application (e.g., an analytics package). The container image 220 can include various information associated with the analytics package. The container image can include a computer executable code of the analytical model in the analytics package. Additionally or alternately, the container image can include the runtime environment, libraries (e.g., associated with the computer language in which the code of the analytical model is written), configurations, etc., associated with the execution of the analytics package on the distributed computing system (e.g., cloud). FIG. 3 illustrates an exemplary container image 300. The container image 300 can include a multithreaded Python Gunicorn Server 302, code of the analytic model 304 and requirement data 306. The Python Gunicorn Server 302 can be a multithreaded server which can allow for execution of the analytics package on the distributed computing system. The multithreaded nature of the Python Gunicorn Server 302 can facilitate for handling of multiple concurrent requests. The requirement data 306 is a text file which specifies the various dependent packages which have been used in the analytic model 304.

The container image 220 can be stored in the container registry 212. The container registry 212 can be used to store multiple container images associated with various analytics packages (e.g., from multiple clients). The incubator service 204 can also generate a unique identifier associated with the container image 220. The unique identifier can be used to deploy the container image 220. For example, the unique identifier can be used to retrieve the container image 220 form the container registry 212. The unique identifier is provided to the client 202 (e.g., via the GUI). The client 202 can request the deployment of the container image 220 by providing the unique identifier to the analytics framework 200 (e.g., via the GUI).

Returning to FIG. 1, at step 106, a deployer service 206 in the analytics framework 200 can receive data characterizing deployment parameters associated with the deployment of the container image 220 on the plurality of compute nodes of the distributed computing system. The deployer service 206 includes software that can pull / extract a container image from the container registry 212. The data characterizing the deployment parameters can be received from the client 202. This can be done, via a second API call 234 (e.g., a second REST API call). The deployment parameters can include the computing resources of the distributed computing system needed to execute the analytics package in the container image 220 (e.g., execute the analytical model code). For example, the deployment parameters can include one or more of the compute nodes (e.g., processors / processing resources), data storage capacity, RAM, etc. that are needed to execute the analytics package. Based on deployment parameters, the analytics framework 200 can allocate the computing resources of the distributed computing system. Additionally, the deployer service 206 can receive the unique identifier indicative of the container image 220 from the client 202.

At step 108, the deployer service 206 can deploy / generate an analytics service pod 208 associated with the container image 220. The deployer service 206 can retrieve the container image 220 from the container registry 212 based on the unique identifier received at step 106. After the container image 220 has been retrieved, the deployer service 206 can generate the analytic service pod 208 based on the retrieved container image 220 and the deployment parameters received at step 106. For example, the analytics service pod 208 can include the container image 220 and the deployment parameters. The analytics service pod 208 can be configured to execute the analytics package in the container image 220 on the distributed computing system based on the deployment parameters. For example, the computing resources of the distributed computing system (e.g., number of compute nodes) can be allocated based on the deployment parameters in the analytics service pod. The analytics service pod 208 can execute the analytics package upon receiving an input from the client. In some implementations, the analytics service pod 208 can include an instance of a running process on the distributed computing system that has been created based on parameters provided by the user (e.g., via second API call).

The analytics service pod 208 can receive data characterizing a request to execute the analytics package associated with the container image 220 on the distributed computing system (e.g., on one or more compute nodes of distributed computing system). The request can include input parameter(s) for the analytics package included in the container image 220 of the analytics service pod 208. The data characterizing the request to execute the analytic package can be received from the client 202. This can be done, via a third API call 236 (e.g., a third REST API call). Upon receiving the request, the deployed analytics service pod 208 can execute the analytics package (e.g., based on input parameter(s) as inputs of the analytics package).

The database 218 can include meta-information associated with the analytic package / container image. The meta-information can include, for example, the unique model identifier, the runtime of the analytics package, distributed system machine parameters associated with the execution of the analytics package, status of the analytics model, etc. Catalog Service 214 can be a layer above the database 218 which can facilitate the database operations (e.g., create, update, fetch, delete, etc.) via exposed REST endpoint. In some implementations, a security service 210 can regulate the access of the client 202 to the analytics framework. For example, the security service 210 can request the client 202 for a passcode prior to allowing access to the client 202 to the analytics framework (e.g., prior to making first, second or third API calls).

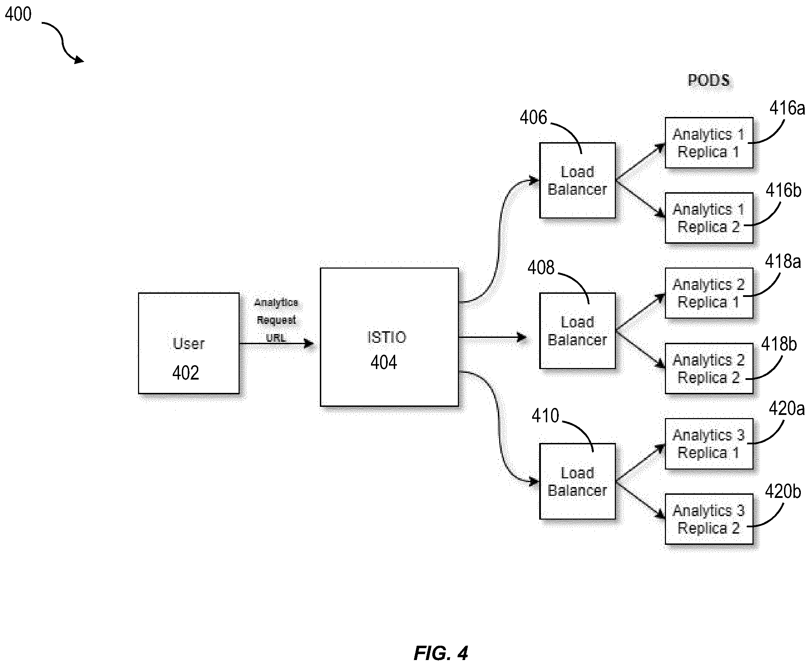

In some implementations, the deployer service 206 can generate multiple analytics service pods. For example, the deployment parameters can include a number of replicas of analytics service pods to be generated for the container image 220 (e.g., associated with the analytics package received at step 102). FIG. 4 illustrates an exemplary schematic illustration of multiple analytics service pod deployed on the distributed computing system. The analytics framework can include an ISTIO 404 that can receive the third API call 236 from the client 202. The analytics framework can further include load balancers 406, 408 and 410. Each of the load balancers can be associated with analytics service pods of a unique container image (or a unique analytics package / analytical model). For example, load balancer 406 can execute analytics service pods 416a and 416b (e.g., associated with a first analytics package); load balancer 408 can execute analytics service pods 418a and 418b (e.g., associated with a second analytics package); and load balancer 410 can execute analytics service pods 420a and 420b (e.g., associated with a third analytics package). Analytics service pods 418a and 418b can be replica analytics service pods generated for a given container image. The number or replicas can be based on the deployment parameters associated with the give container image (e.g., received in the second API call). For example, the deployment parameters can include a number of analytic service pods replica to be created for the given container image. In some implementations, the number of analytic service pods replica can be indicative of the maximum number simultaneous execution of the analytics package associated with the given container image (e.g., simultaneous execution of an analytical model with different input parameters).

Upon receiving the third API call 236, the ISTIO can identify the analytics package / container image requested to be executed in the API call 236, and can instruct the relevant load balancer to carry out the execution of an analytics service pod associated with the analytics package / container image. Upon receiving the instruction from the ISTIO the load balancer can identify the analytics service pod replicas that are currently available (e.g., are not executing the analytics package therein) and execute the identified analytics service pod. Other embodiments are within the scope of the disclosed subject matter. For example, the prioritization method described in this application can be used in facilities that have complex machines with multiple operational parameters that need to be altered to change the performance of the machines. Usage of the word "optimize" / "optimizing" in this application can imply "improve" / "improving."

Certain exemplary embodiments will now be described to provide an overall understanding of the principles of the structure, function, manufacture, and use of the systems, devices, and methods disclosed herein. One or more examples of these embodiments are illustrated in the accompanying drawings. Those skilled in the art will understand that the systems, devices, and methods specifically described herein and illustrated in the accompanying drawings are non-limiting exemplary embodiments and that the scope of the present invention is defined solely by the claims. The features illustrated or described in connection with one exemplary embodiment may be combined with the features of other embodiments. Such modifications and variations are intended to be included within the scope of the present invention. Further, in the present disclosure, like-named components of the embodiments generally have similar features, and thus within a particular embodiment each feature of each like-named component is not necessarily fully elaborated upon.

The subject matter described herein can be implemented in digital electronic circuitry, or in computer software, firmware, or hardware, including the structural means disclosed in this specification and structural equivalents thereof, or in combinations of them. The subject matter described herein can be implemented as one or more computer program products, such as one or more computer programs tangibly embodied in an information carrier (e.g., in a machine-readable storage device), or embodied in a propagated signal, for execution by, or to control the operation of, data processing apparatus (e.g., a programmable processor, a computer, or multiple computers). A computer program (also known as a program, software, software application, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file. A program can be stored in a portion of a file that holds other programs or data, in a single file dedicated to the program in question, or in multiple coordinated files (e.g., files that store one or more modules, sub-programs, or portions of code). A computer program can be deployed to be executed on one computer or on multiple computers at one site or distributed across multiple sites and interconnected by a communication network.

The processes and logic flows described in this specification, including the method steps of the subject matter described herein, can be performed by one or more programmable processors executing one or more computer programs to perform functions of the subject matter described herein by operating on input data and generating output. The processes and logic flows can also be performed by, and apparatus of the subject matter described herein can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processor of any kind of digital computer. Generally, a processor will receive instructions and data from a Read-Only Memory or a Random Access Memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, (e.g., EPROM, EEPROM, and flash memory devices); magnetic disks, (e.g., internal hard disks or removable disks); magneto-optical disks; and optical disks (e.g., CD and DVD disks). The processor and the memory can be supplemented by, or incorporated in, special purpose logic circuitry.

To provide for interaction with a user, the subject matter described herein can be implemented on a computer having a display device, e.g., a CRT (cathode ray tube) or LCD (liquid crystal display) monitor, for displaying information to the user and a keyboard and a pointing device, (e.g., a mouse or a trackball), by which the user can provide input to the computer. Other kinds of devices can be used to provide for interaction with a user as well. For example, feedback provided to the user can be any form of sensory feedback, (e.g., visual feedback, auditory feedback, or tactile feedback), and input from the user can be received in any form, including acoustic, speech, or tactile input.

The techniques described herein can be implemented using one or more modules. As used herein, the term "module" refers to computing software, firmware, hardware, and/or various combinations thereof. At a minimum, however, modules are not to be interpreted as software that is not implemented on hardware, firmware, or recorded on a non-transitory processor readable recordable storage medium (i.e., modules are not software *per se*). Indeed "module" is to be interpreted to always include at least some physical, non-transitory hardware such as a part of a processor or computer. Two different modules can share the same physical hardware (e.g., two different modules can use the same processor and network interface). The modules described herein can be combined, integrated, separated, and/or duplicated to support various applications. Also, a function described herein as being performed at a particular module can be performed at one or more other modules and/or by one or more other devices instead of or in addition to the function performed at the particular module. Further, the modules can be implemented across multiple devices and/or other components local or remote to one another. Additionally, the modules can be moved from one device and added to another device, and/or can be included in both devices.

The subject matter described herein can be implemented in a computing system that includes a back-end component (e.g., a data server), a middleware component (e.g., an application server), or a front-end component (e.g., a client computer having a graphical user interface or a web interface through which a user can interact with an implementation of the subject matter described herein), or any combination of such back-end, middleware, and front-end components. The components of the system can be interconnected by any form or medium of digital data communication, e.g., a communication network. Examples of communication networks include a local area network ("LAN") and a wide area network ("WAN"), e.g., the Internet.

Approximating language, as used herein throughout the specification and claims, may be applied to modify any quantitative representation that could permissibly vary without resulting in a change in the basic function to which it is related. Accordingly, a value modified by a term or terms, such as "about" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

## Claims

1. A method (100) comprising:
receiving (102) data characterizing an analytics package; generating (104), by an analytics framework (200) associated with a plurality of compute nodes, a container image (220) associated with the analytics package and a unique identifier indicative of the container image (220) and providing the unique identifier to a client (202), wherein the container image (220) is saved in a central container registry (212), the analytics framework allowing for execution of the analytics package by generating, deploying and executing a container image (220) of the analytics package using the unique identifier indicative of the container image (220);
retrieving the container image (220) from the central container registry (212) using the unique identifier, the central container registry (212) storing multiple container images (220) associated with various analytics packages;
receiving (106), from the client (202) by a deployer service (206) of the analytics framework (200), data characterizing deployment parameters associated with the deployment of the container image (220) on the plurality of compute nodes and the unique identifier indicative of the container image (220) wherein the deployer service (206) includes software configured to automatically retrieve the container image (220) from the central container registry (212) using the unique identifier; and
generating (108) at least one analytics service pod (208) based on the deployment parameters and the unique identifier, wherein the at least one analytics service pod (208) includes the container image (220) and is configured to execute the analytics package on one or more compute nodes of the plurality of compute nodes based on the deployment parameters,
wherein the deployment parameters include computing resource associated with execution of the at least one analytics service pod on the plurality of compute nodes.

2. The method of claim 1, wherein generating (108) the at least one analytics service pod (208) includes selecting the container image (220) from a plurality of container images saved in the central container registry (212) based on the received unique identifier.

3. The method of claim 2, further comprising:
receiving data characterizing a request to execute the analytic package on the one or more compute nodes of the plurality of compute nodes; and
executing the analytics package by at least deploying the container image (220) in first analytic pod.

4. The method of claim 3, wherein data characterizing the analytics package is received by an incubator service via a first REST API call, data characterizing deployment parameters is received by a deployer service via a second REST API call, and data characterizing the request to execute the analytic package is received by the at least one analytics service pod via a third REST API call,
wherein the incubator service, the deployer service and the at least one analytics service pod are included in the analytics framework.

5. The method of claim 1, further comprising providing the unique identifier to the client (202) and receiving data characterizing deployment parameters from the client (202).

6. The method of claim 1, wherein the container image (220) includes code of one or more analytical models in the analytics package.

7. The method of claim 1, wherein the plurality of compute nodes form a kubernetes cluster.

8. A system comprising:
at least one data processor;
memory coupled to the at least one data processor, the memory storing instructions to cause the at least one data processor to perform operations comprising:
receiving data characterizing an analytics package;
generating, by an analytics framework (200) associated with a plurality of compute nodes, a container image (220) associated with the analytics package and a unique identifier indicative of the container image (220) and providing the unique identifier to a client (202), wherein the container image (220) is saved in a central container registry (212), the analytics framework allowing for execution of the analytics package by generating, deploying and executing a container image (220) of the analytics package using the unique identifier indicative of the container image (220);
retrieving the container image (220) from the central container registry (212) using the unique identifier, the central container registry (212) storing multiple container images (220) associated with various analytics packages;;
receiving, from the client (202) by a deployer service (206) of the analytics framework (200), data characterizing deployment parameters associated with the deployment of the container image (220) on the plurality of compute nodes and the unique identifier indicative of the container image (220) wherein the deployer service (206) includes software configured to automatically retrieve the container image (220) from the central container registry (212) using the unique identifier; and
generating at least one analytics service pod (208) based on the deployment parameters and the unique identifier, wherein the at least one analytics service pod (208) includes the container image and is configured to execute the analytics package on one or more compute nodes of the plurality of compute nodes based on the deployment parameters.

9. The system of claim 8, wherein generating the at least one analytics service pod (208) includes selecting the container image from a plurality of container images (208) saved in the central container registry (212) based on the received unique identifier.

10. The system of claim 9, wherein the operations further comprising:
receiving data characterizing a request to execute the analytic package on the one or more compute nodes of the plurality of compute nodes; and
executing the analytics package by at least deploying the container image (220) in first analytic pod.

11. The system of claim 10, wherein data characterizing the analytics package is received by an incubator service via a first REST API call, data characterizing deployment parameters is received by a deployer service via a second REST API call, and data characterizing the request to execute the analytic package is received by the at least one analytics service pod (208) via a third REST API call,
wherein the incubator service, the deployer service and the at least one analytics service pod (208) are included in the analytics framework.

12. The system of claim 10, wherein operations further comprising providing the unique identifier to the client (202) and receiving data characterizing deployment parameters from the client (202).

13. The system of claim 8, wherein the container image (220) includes code of one or more analytical models in the analytics package.

14. The system of claim 8, wherein the plurality of compute nodes form a kubernetes cluster.

15. A computer program product comprising a non-transitory machine-readable medium storing instructions that, when executed by at least one programmable processor that comprises at least one physical core and a plurality of logical cores, cause the at least one programmable processor to perform operations comprising the method of any one of claims 1 to 7.

16. The method of claim 1, further comprising:
generating multiple replicas of analytics service pods based on a received number of analytics service pod replica, wherein the deployment parameters include the number of analytics service pod replica.

17. The method of claim 1, wherein computing resource includes one or more of data storage capacity, random access memory, and processing resources.

## Patentansprüche

1. Verfahren (100), umfassend:
Empfangen (102) von Daten, die ein Analysepaket kennzeichnen;
Erzeugen (104) eines Container-Images (220), das dem Analysepaket zugeordnet ist, und einer eindeutigen Kennung, die das Container-Image (220) angibt, durch ein Analyse-Framework (200), das einer Vielzahl von Rechenknoten zugeordnet ist, und zur Verfügung stellen der eindeutigen Kennung an einen Client (202), wobei das Container-Image (220) in einer zentralen Container-Registrierung (212) gespeichert wird, wobei das Analyse-Framework die Ausführung des Analysepakets ermöglicht, indem es ein Container-Image (220) des Analysepakets unter Verwendung der eindeutigen Kennung, die das Container-Image (220) angibt, generiert, bereitstellt und ausführt;
Abrufen des Container-Images (220) aus der zentralen Container-Registrierungsstelle (212) unter Verwendung der eindeutigen Kennung, wobei die zentrale Container-Registrierungsstelle (212) mehrere Container-Images (220) speichert, die verschiedenen Analysepaketen zugeordnet sind;
Empfangen (106) von Daten, von dem Client (202) durch einen Bereitstellungsdienst (206) des Analyse-Frameworks (200), die die Bereitstellungsparameter kennzeichnen, die der Bereitstellung des Container-Images (220) auf der Vielzahl von Rechenknoten zugeordnet sind, und der eindeutigen Kennung, die das Container-Image (220) angibt, wobei der Bereitstellungsdienst (206) Software einschließt, die so konfiguriert ist, dass sie das Container-Image (220) unter Verwendung der eindeutigen Kennung automatisch aus dem zentralen Container-Register (212) abruft; und
Erzeugen (108) mindestens eines Analysedienst-Pods (208) basierend auf den Bereitstellungsparametern und der eindeutigen Kennung, wobei der mindestens eine Analysedienst-Pod (208) das Container-Image (220) einschließt und so konfiguriert ist, dass er das Analysepaket auf einem oder mehreren Rechenknoten der Vielzahl von Rechenknoten basierend auf den Bereitstellungsparametern ausführt,
wobei die Bereitstellungsparameter Rechenressourcen einschließen, die der Ausführung des mindestens einen Analysedienst-Pods auf der Vielzahl von Rechenknoten zugeordnet sind.

2. Verfahren nach Anspruch 1, wobei das Erzeugen (108) des mindestens einen Analysedienst-Pods (208) das Auswählen des Container-Images (220) aus einer Vielzahl von Container-Images einschließt, die in der zentralen Container-Registrierungsstelle (212) gespeichert sind, basierend auf der empfangenen eindeutigen Kennung.

3. Verfahren nach Anspruch 2, ferner umfassend:
Empfangen von Daten, die eine Anforderung zur Ausführung des Analysepakets auf dem einen oder den mehreren Rechenknoten der mehreren Rechenknoten kennzeichnen, und
Ausführen des Analysepakets durch mindestens Anwenden des Container-Images (220) in einem ersten Analyse-Pod.

4. Verfahren nach Anspruch 3, wobei Daten, die das Analysepaket kennzeichnen, von einem Inkubator-Dienst über einen ersten REST-API-Aufruf empfangen werden, Daten, die Bereitstellungsparameter kennzeichnen, von einem Bereitstellungsdienst über einen zweiten REST-API-Aufruf empfangen werden, und Daten, die die Anforderung zur Ausführung des Analysepakets kennzeichnen, von dem mindestens einen Analysedienst-Pod über einen dritten REST-API-Aufruf empfangen werden,
wobei der Inkubator-Dienst, der Bereitstellungsdienst und der mindestens eine Analysedienst-Pod in dem Analyse-Framework enthalten sind.

5. Verfahren nach Anspruch 1, das ferner das zur Verfügung stellen der eindeutigen Kennung an den Client (202) und das Empfangen von Daten, die die Bereitstellungsparameter kennzeichnen, von dem Client (202) umfasst.

6. Verfahren nach Anspruch 1, wobei das Container-Image (220) Code eines oder mehrerer Analysemodelle im Analysepaket enthält.

7. Verfahren nach Anspruch 1, wobei die Vielzahl von Rechenknoten einen Kubemetes-Cluster bilden.

8. System, umfassend:
mindestens einen Datenprozessor;
einen Speicher, der mit dem mindestens einen Datenprozessor gekoppelt ist, wobei der Speicher Anweisungen speichert, um den mindestens einen Datenprozessor zu veranlassen, Betriebe durchzuführen, umfassend:
Empfangen von Daten, die ein Analysepaket kennzeichnen;
Erzeugen eines Container-Images (220), das dem Analysepaket zugeordnet ist, und einer eindeutigen Kennung, die das Container-Image (220) angibt, durch ein Analyse-Framework (200), das einer Vielzahl von Rechenknoten zugeordnet ist, und zur Verfügung stellen der eindeutigen Kennung an einen Client (202), wobei das Container-Image (220) in einer zentralen Container-Registrierung (212) gespeichert wird, wobei das Analyse-Framework die Ausführung des Analysepakets ermöglicht, indem es ein Container-Image (220) des Analysepakets unter Verwendung der eindeutigen Kennung, die das Container-Image (220) angibt, generiert, bereitstellt und ausführt;
Abrufen des Container-Images (220) aus der zentralen Container-Registrierungsstelle (212) unter Verwendung der eindeutigen Kennung, wobei die zentrale Container-Registrierungsstelle (212) mehrere Container-Images (220) speichert, die verschiedenen Analysepaketen zugeordnet sind;;
Empfangen von Daten vom Client (202) durch einen Bereitstellungsdienst (206) des Analyse-Frameworks (200), Daten, die die Bereitstellungsparameter kennzeichnen, die der Bereitstellung des Container-Images (220) auf der Vielzahl von Rechenknoten zugeordnet sind, und der eindeutigen Kennung, die das Container-Image (220) angibt, wobei der Bereitstellungsdienst (206) Software einschließt, die so konfiguriert ist, dass sie das Container-Image (220) unter Verwendung der eindeutigen Kennung automatisch aus dem zentralen Container-Register (212) abruft; und
Erzeugen mindestens eines Analysedienst-Pods (208) basierend auf den Bereitstellungsparametern und der eindeutigen Kennung, wobei der mindestens eine Analysedienst-Pod (208) das Container-Image umfasst und so konfiguriert ist, dass er das Analysepaket auf einem oder mehreren Rechenknoten der Vielzahl von Rechenknoten basierend auf den Bereitstellungsparametern ausführt.

9. System nach Anspruch 8, wobei das Erzeugen des mindestens einen Analysedienst-Pods (208) das Auswählen des Container-Images aus einer Vielzahl von Container-Images (208) umfasst, die in der zentralen Container-Registrierungsstelle (212) gespeichert sind, basierend auf der empfangenen eindeutigen Kennung.

10. System nach Anspruch 9, wobei die Betriebe ferner umfassen:
Empfangen von Daten, die eine Anforderung zur Ausführung des Analysepakets auf dem einen oder den mehreren Rechenknoten der mehreren Rechenknoten kennzeichnen, und
Ausführen des Analysepakets durch mindestens Anwenden des Container-Images (220) in einem ersten Analyse-Pod.

11. System nach Anspruch 10, wobei Daten, die das Analysepaket kennzeichnen, von einem Inkubator-Dienst über einen ersten REST-API-Aufruf empfangen werden, Daten, die Bereitstellungsparameter kennzeichnen, von einem Bereitstellungsdienst über einen zweiten REST-API-Aufruf empfangen werden, und Daten, die die Anforderung zur Ausführung des Analysepakets kennzeichnen, von dem mindestens einen Analysedienst-Pod (208) über einen dritten REST-API-Aufruf empfangen werden,
wobei der Inkubator-Dienst, der Bereitstellungsdienst und der mindestens eine Analysedienst-Pod (208) in dem Analyse-Framework enthalten sind.

12. System nach Anspruch 10, wobei Operationen ferner das zur Verfügung stellen der eindeutigen Kennung an den Client (202) und das Empfangen von Daten, die die Bereitstellungsparameter kennzeichnen, vom Client (202) umfassen.

13. System nach Anspruch 8, wobei das Container-Image (220) Code eines oder mehrerer Analysemodelle im Analysepaket enthält.

14. System nach Anspruch 8, wobei die Vielzahl von Rechenknoten einen Kubernetes-Cluster bilden.

15. Computerprogrammprodukt, umfassend ein nichtflüchtiges maschinenlesbares Medium, das Anweisungen speichert, die, wenn sie durch mindestens einen programmierbaren Prozessor ausgeführt werden, der mindestens einen physikalischen Kern und eine Vielzahl von logischen Kernen umfasst, den mindestens einen programmierbaren Prozessor veranlassen, Abläufe durchzuführen, umfassend das Verfahren nach einem der Ansprüche 1 bis 7.

16. Verfahren nach Anspruch 1, ferner umfassend:
Erzeugen mehrerer Replikate von Analysedienst-Pods basierend auf einer empfangenen Anzahl von Analysedienst-Pod-Replikaten, wobei die Bereitstellungsparameter die Anzahl der Analysedienst-Pod-Replikate umfassen.

17. Verfahren nach Anspruch 1, wobei die Computerressource eines oder mehreres einschließt von Datenspeicherkapazität, Direktzugriffsspeicher und Verarbeitungsressourcen.

## Revendications

1. Procédé (100) comprenant :
la réception (102) de données caractérisant un package d'analyse ;
la génération (104), par un cadre d'analyse (200) associé à une pluralité de nœuds de calcul, d'une image de conteneur (220) associée au package d'analyse et d'un identificateur unique indiquant l'image de conteneur (220) et la fourniture de l'identificateur unique à un client (202), dans lequel l'image de conteneur (220) est enregistrée dans un registre de conteneur central (212), le cadre d'analyse permettant l'exécution du package d'analyse en générant, en déployant et en exécutant une image de conteneur (220) du package d'analyse à l'aide de l'identificateur unique indiquant l'image de conteneur (220) ;
la récupération de l'image de conteneur (220) auprès du registre de conteneur central (212) à l'aide de l'identificateur unique, le registre de conteneur central (212) stockant de multiples images de conteneur (220) associées à divers packages d'analyse ;
la réception (106), en provenance du client (202) par un service de déploiement (206) du cadre d'analyse (200), de données caractérisant des paramètres de déploiement associés au déploiement de l'image de conteneur (220) sur la pluralité de nœuds de calcul et de l'identificateur unique indiquant l'image de conteneur (220) dans lequel le service de déploiement (206) comporte un logiciel configuré pour récupérer automatiquement l'image de conteneur (220) auprès du registre de conteneur central (212) à l'aide de l'identificateur unique ; et
la génération (108) d'au moins un module de service d'analyse (208) en fonction des paramètres de déploiement et de l'identificateur unique, dans lequel l'au moins un module de service d'analyse (208) comporte l'image de conteneur (220) et est configuré pour exécuter le package d'analyse sur un ou plusieurs nœuds de calcul de la pluralité de nœuds de calcul en fonction des paramètres de déploiement,
dans lequel les paramètres de déploiement comportent une ressource de calcul associée à l'exécution de l'au moins un module de service d'analyse sur la pluralité de nœuds de calcul.

2. Procédé selon la revendication 1, dans lequel la génération (108) de l'au moins un module de service d'analyse (208) comporte la sélection de l'image de conteneur (220) parmi une pluralité d'images de conteneur enregistrées dans le registre de conteneur central (212) en fonction de l'identificateur unique reçu.

3. Procédé selon la revendication 2, comprenant en outre :
la réception de données caractérisant une demande pour exécuter le package d'analyse sur le ou les nœuds de calcul de la pluralité de nœuds de calcul ; et
l'exécution du package d'analyse en déployant au moins l'image de conteneur (220) dans un premier module d'analyse.

4. Procédé selon la revendication 3, dans lequel les données caractérisant le package d'analyse sont reçues par un service d'incubation par l'intermédiaire d'un premier appel API REST, les données caractérisant les paramètres de déploiement sont reçues par un service de déploiement par l'intermédiaire d'un deuxième appel API REST, et les données caractérisant la demande pour exécuter le package d'analyse sont reçues par l'au moins un module de service d'analyse par l'intermédiaire d'un troisième appel API REST,
dans lequel le service d'incubation, le service de déploiement et l'au moins un module de service d'analyse sont inclus dans le cadre d'analyse.

5. Procédé selon la revendication 1, comprenant en outre la fourniture de l'identificateur unique au client (202) et la réception de données caractérisant les paramètres de déploiement en provenance du client (202).

6. Procédé selon la revendication 1, dans lequel l'image de conteneur (220) comporte un code d'un ou plusieurs modèles d'analyse dans le package d'analyse.

7. Procédé selon la revendication 1, dans lequel la pluralité de nœuds de calcul forment une grappe Kubernetes.

8. Système comprenant :
au moins un processeur de données ;
de la mémoire couplée à l'au moins un processeur de données, la mémoire stockant des instructions pour amener l'au moins un processeur de données à mettre en œuvre des opérations comprenant :
la réception de données caractérisant un package d'analyse ;
la génération, par un cadre d'analyse (200) associé à une pluralité de nœuds de calcul, d'une image de conteneur (220) associée au package d'analyse et d'un identificateur unique indiquant l'image de conteneur (220) et la fourniture de l'identificateur unique à un client (202), dans lequel l'image de conteneur (220) est enregistrée dans un registre de conteneur central (212), le cadre d'analyse permettant l'exécution du package d'analyse en générant, en déployant et en exécutant une image de conteneur (220) du package d'analyse à l'aide de l'identificateur unique indiquant l'image de conteneur (220) ;
la récupération de l'image de conteneur (220) auprès du registre de conteneur central (212) à l'aide de l'identificateur unique, le registre de conteneur central (212) stockant de multiples images de conteneur (220) associées à divers packages d'analyse ;
la réception, en provenance du client (202) par un service de déploiement (206) du cadre d'analyse (200), de données caractérisant des paramètres de déploiement associés au déploiement de l'image de conteneur (220) sur la pluralité de nœuds de calcul et de l'identificateur unique indiquant l'image de conteneur (220) dans lequel le service de déploiement (206) comporte un logiciel configuré pour récupérer automatiquement l'image de conteneur (220) auprès du registre de conteneur central (212) à l'aide de l'identificateur unique ; et
la génération d'au moins un module de service d'analyse (208) en fonction des paramètres de déploiement et de l'identificateur unique, dans lequel l'au moins un module de service d'analyse (208) comporte l'image de conteneur et est configuré pour exécuter le package d'analyse sur un ou plusieurs nœuds de calcul de la pluralité de nœuds de calcul en fonction des paramètres de déploiement.

9. Système selon la revendication 8, dans lequel la génération de l'au moins un module de service d'analyse (208) comporte la sélection de l'image de conteneur parmi une pluralité d'images de conteneur (208) enregistrées dans le registre de conteneur central (212) en fonction de l'identificateur unique reçu.

10. Système selon la revendication 9, dans lequel les opérations comprennent en outre :
la réception de données caractérisant une demande pour exécuter le package d'analyse sur le ou les nœuds de calcul de la pluralité de nœuds de calcul ; et
l'exécution du package d'analyse en déployant au moins l'image de conteneur (220) dans un premier module d'analyse.

11. Système selon la revendication 10, dans lequel les données caractérisant le package d'analyse sont reçues par un service d'incubation par l'intermédiaire d'un premier appel API REST, les données caractérisant les paramètres de déploiement sont reçues par un service de déploiement par l'intermédiaire d'un deuxième appel API REST, et les données caractérisant la demande pour exécuter le package d'analyse sont reçues par l'au moins un module de service d'analyse (208) par l'intermédiaire d'un troisième appel API REST,
dans lequel le service d'incubation, le service de déploiement et l'au moins un module de service d'analyse (208) sont inclus dans le cadre d'analyse.

12. Système selon la revendication 10, dans lequel les opérations comprennent en outre la fourniture de l'identificateur unique au client (202) et la réception de données caractérisant les paramètres de déploiement en provenance du client (202).

13. Système selon la revendication 8, dans lequel l'image de conteneur (220) comporte un code d'un ou plusieurs modèles d'analyse dans le package d'analyse.

14. Système selon la revendication 8, dans lequel la pluralité de nœuds de calcul forment une grappe Kubernetes.

15. Produit programme d'ordinateur comprenant un support non transitoire lisible par machine stockant des instructions qui, lorsqu'elles sont exécutées par au moins un processeur programmable qui comprend au moins un cœur physique et une pluralité de cœurs logiques, amènent l'au moins un processeur programmable à mettre en œuvre des opérations comprenant le procédé selon l'une quelconque des revendications 1 à 7.

16. Procédé selon la revendication 1, comprenant en outre :
la génération de multiples répliques de modules de service d'analyse en fonction d'un nombre reçu de répliques de module de service d'analyse, dans lequel les paramètres de déploiement comportent le nombre de répliques de module de service d'analyse.

17. Procédé selon la revendication 1, dans lequel la ressource de calcul comporte une ou plusieurs parmi capacité de stockage de données, mémoire vive et ressources de traitement.
